# EUROPEAN PATENT APPLICATION

(11) **EP 1 835 386 A2**
(43) Date of publication of application: **19.09.2007**
(21) Application number: 07102219.8
(22) Date of filing: 13.02.2007
(51) Int. Cl.: G06F 3/048

(54) **Touchpad-based input system and method for portable device**

(30) Priority: 16.03.2006 KR 20060024456
(71) Applicant: Samsung Electronics Co., Ltd., Suwon-si, Gyeonggi-Do (KR)
(72) Inventor: Ryu, Dong Seok, Mapo-gu Seoul (KR); Lee, Jong Hoon, Suji-gu, Yongin-si Gyeonggi-do (KR); Shin, Seung Woo, Gwanak-gu Seoul (KR); Hwang, Byeong Cheol No. 902 Brownstone Yeoksam Apt, Seoul (KR)
(74) Representative: Grünecker, Kinkeldey, Stockmair & Schwanhäusser Anwaltssozietät

(57) **Abstract**

A touchpad-based input system and method of a portable device capable of facilitating manipulation of device operation. The touchpad-based input method of a portable device having a display and a touchpad determines whether a scrolling signal is input through the touchpad, scrolls a current presentation across the display in a direction based on the scrolling signal, and displays another presentation as a result of the scrolling when a scrolling signal is input.

## Description

### BACKGROUND OF THE INVENTION

### Field of the Invention

The present invention relates to a portable communication device and, in particular, to a touchpad-based input system and method of a portable device capable of facilitating manipulation of the device operation.

### Background of the Related Art

As portable phones have gained widespread acceptance as an efficient means of voice and data communications, the market for mobile wireless is increasing by leaps and bounds. The success of mobile communication lies in the abilities to provide instant connectivity anytime and anywhere and to provide various services such as wireless Internet access, Short Message Service (SMS), on-demand multimedia services, etc

Recently, these portable phones have been implemented with additional functions enabling use as a personal scheduler or a data communication device with computers, as well as basic voice communication. Recently, portable phones integrated with various digital devices such as image processors, virtual three dimensional stereo sound modules, MP3 modules, camera modules, etc., have emerged into the market.

Sometimes, portable phones are called Internet phones, data communication phones, multimedia phones, health assistant phones, game phones, and the like, according to their additional functions.

As portable phones are equipped with various digital devices and implemented with various functions, designing user interfaces for portable phones presents unique challenges in view of the limited miniaturized size, the limited number of controls that can be accommodated on such devices, and the need for quick, simple and intuitive device operation.

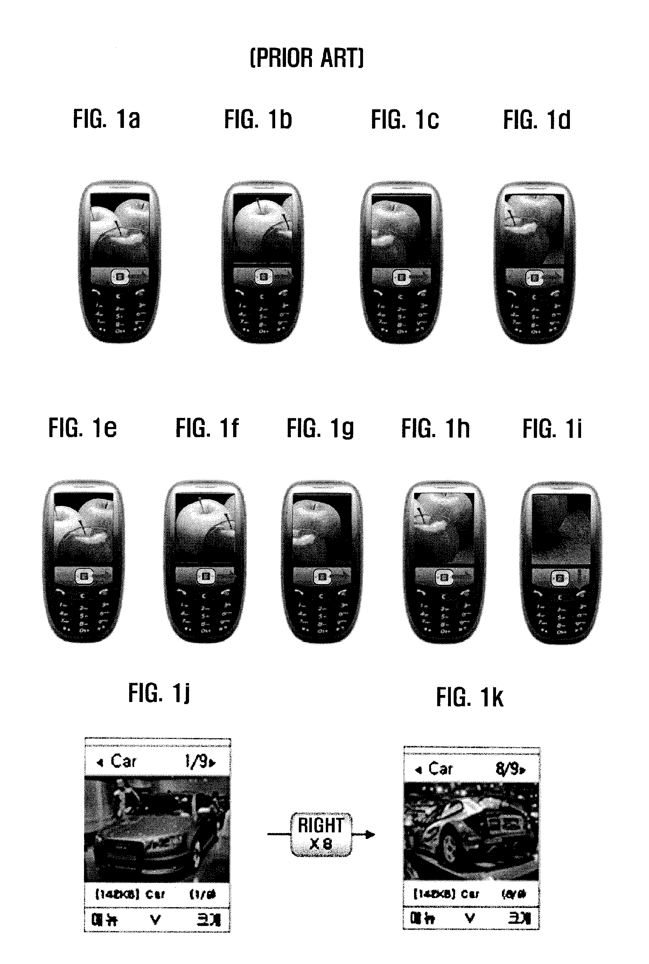

FIG. 1a to FIG. 1i are sequential screen shots of screen positioning processes over an image according to conventional key manipulation. In FIG. 1a to FIG. 1g, a right direction key of a navigation function keypad of portable phone is pushed and pulled repeatedly such that the screen window moves over the pull image step by step. Also, the FIG. 1i shows the case when a down direction key is pushed such that the screen window is moved down over the pull image. As shown in FIG. 1a to FIG. 1i, in order to move the screen window in a skew direction, i.e., to see a right-bottom portion of the displayed image the rightward key and the downward key should be repeatedly pushed and pulled until the expected portion of the image shows.

FIG. 1j and FIG. 1k are screen shots of image retrieval processes according to conventional key manipulation. In order to see a target image of FIG. 1k, i. e. the ninth registered image, while a current image of FIG. 1j, i.e., the first registered image, eight times of key strokes should be performed.

Such keypad-based input technique requires complicate key manipulations for navigating on a single image and retrieving target image, and the complicated keypad manipulation delays obtaining a required operation result.

In order to simplify these manipulation operations, several touchpad-based input methods have been proposed. One of the touchpad-based input methods uses two touchpad modules for improving navigation accuracy, and another proposed method is implemented with auxiliary buttons for assisting touchpad manipulation.

However, most conventional touchpad input techniques disclose only the adoption of a touchpad but no detailed operations of the touchpad.

Also, since conventional touchpad input techniques have been implemented in consideration of horizontal and vertical direction scrolling, it is difficult to expect various and sensitive controls and quick operation responses.

### SUMMARY OF THE INVENTION

The present invention has been made in an effort to solve the above problems, and it is an object of the present invention to provide a touchpad-based input system and method of a portable device, which is capable of improving manipulation convenience of the portable device with novel user interface.

It is another object of the present invention to provide a touchpad-based input system and method of a portable device that supports various manipulation functions.

It is another object of the present invention to provide a touchpad-based input system and method of a portable device that is capable improving screen positioning and scrolling ability even on a small display.

It is still another object of the present invention to provide a touchpad-based input system and method of a portable device that is capable of improving manipulation responsibility.

In one aspect of the present invention, the above and other objects are accomplished by a touchpad-based input method of a portable device. The touchpad-based input method includes determining whether a scrolling signal is input through a touchpad, scrolling a current presentation across a display in a direction based on a scrolling signal, if the scrolling signal is input, and displaying another presentation as a result of the scrolling.

In another aspect of the present invention, the above and other objects are accomplished by a touchpad-based input system of a portable device. The touchpad-based input system includes a touchpad which generates control signals by a user's manipulation and a control unit which checks input of the control signal through the touchpad and displays a presentation through a display based on the control signal input through the touchpad.

In still another aspect of the present invention, the above and other objects are accomplished by a touchpad-based input system of a portable device. The touchpad-based input system includes a touchpad which generates a manipulation signal corresponding to a user's touchpad manipulation, a display which shows a presentation rendered in accordance with the manipulation signal, and a controller which generates a control signal corresponding to the manipulation signal and controls the display to render the presentation and displays the rendered presentation based on the control signal.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;
FIG. 1a to FIG. 1i are sequential screen shots of screen positioning processes over an image according to conventional key manipulation;
FIG. 1j and FIG. 1k are screen shots of image retrieval processes according to conventional key manipulation;
FIG. 2 is a block diagram illustrating an inner structure of a portable phone according to the present invention;
FIG. 3 is a front view illustrating the portable phone of FIG. 2;
FIG. 4a and FIG. 4b are views illustrating horizontal and skew direction scrolling processes on an image, respectively, using a touchpad-based input apparatus according to the present invention;
FIG. 4c is a view illustrating image retrieval processes using the touchpad-based input apparatus according to the present invention;
FIG. 5a to FIG. 5d are views illustrating touchpad manipulations for scrolling a content presentation across a display window in various directions;
FIG. 6a and FIG. 6b are views illustrating touchpad manipulations for sliding a plurality of contents across display window;
FIG. 7a to FIG. 7d are views illustrating touchpad manipulation processes for selecting image according to the present invention;
FIG. 8a and FIG. 8b are views illustrating touchpad manipulations for selecting image in a tile view mode according to the present invention; and
FIG. 9 is a flowchart illustrating touchpad-based input method for portable phone according to the present invention.

### DETAILED DESCRIPTION OF THE PREFERRED EMBODIMENTS

Preferred embodiments of the present invention will be described with reference to the accompanying drawings. Wherever possible, the same reference numbers will be used throughout the drawing(s) to refer to the same or like parts. Detailed descriptions of well-known functions and structures incorporated herein will be omitted when it many obscure the subject matter of the present invention.

In the following detailed description, only preferred embodiments of the present invention have been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature and not restrictive.

In the present invention, a touchpad is provided to a portable phone as an input device to secure manipulation conformability. That is, the touchpad is used for screen positioning and scrolling while an image, a document, webpage, game screen, etc., is displayed on a display of the portable phone.

Using the touchpad as the input device, a user can easily navigate a full size of the webpage or document, in all directions, which is limited by the display screen size.

Unlike a conventional keypad input mechanism in which screen positioning and scrolling operations are carried out by manipulating various function keys, the present invention implements operations with the touchpad to reduce complicated key manipulations and improve cursor location accuracy.

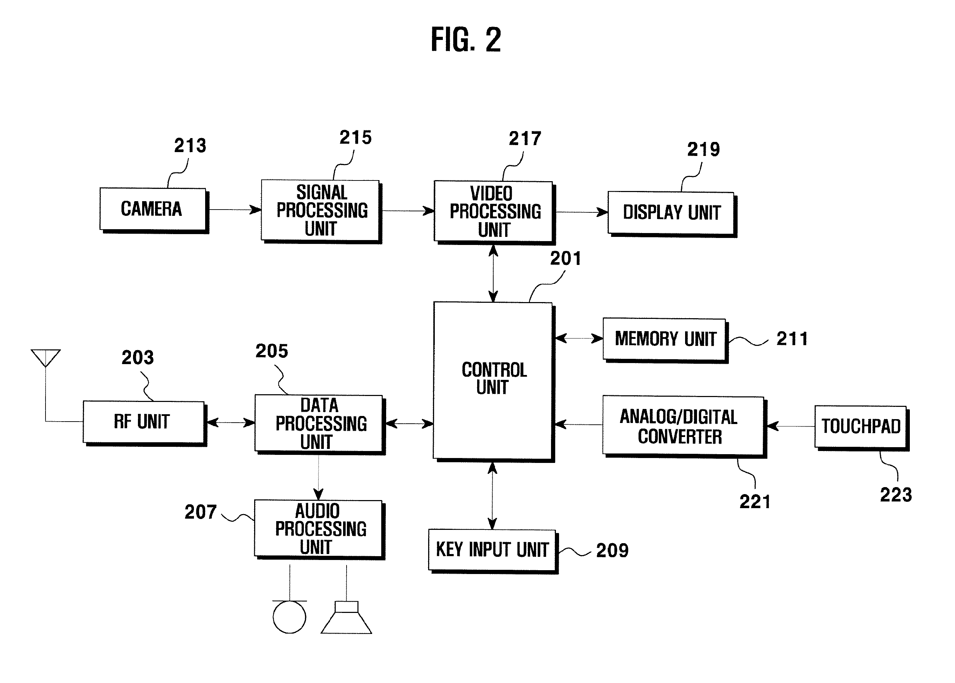

Referring to FIG. 2, a portable phone according to the present invention includes an input part, a processing part, a storage part, an output part, and a communication part.

The input part includes an audio processing unit 207 for processing sound audio data inputted through a microphone, a key input unit 209 for allowing a user to input characters, a camera 213 for taking image and inputting the taken image video data, and a touchpad 223. The touchpad 223 is a flat panel having pressure sensing mechanism so as to move a cursor activated on the display unit 219 in response to signals generated by a touch of finger or a pen to the surface of the flat panel.

The processing part includes a signal processing unit 215 for converting the video data inputted from the camera 213 into digital signals, a video processing unit 217 for processing the digital signals outputted form the signal processing unit 215, a data processing unit 205 for processing the voice signal outputted from the audio processing unit 207 and the character signal generated from the key input unit 209, a control unit 201 for controlling the overall operations of the elements of the portable phone, and an analog/digital converter 221 for converting analog signals from the touchpad 223 into digital signals.

The storage part includes a memory 211 and is responsible for storing user data inputted through the input part and applications for operating the portable phone and performing additional functions of the portable phone.

The output part includes a display unit 219 for displaying user information inputted or requested by the user and listing various functions and the audio processing unit 207 for outputting the sound information.

The communication part is responsible for exchanging data with a counter part terminal through wireless channel and downloading contents from an associated web server, a radio frequency (RF) unit 203, and an antenna.

The RF unit 203 can support various types of communication services such as cellular or other wireless communications. The RF unit 203 includes an RF transmitter for up-converting and amplifying the signal to be transmitted and an RF receiver for low-noise-amplifying and down-converting the received signal. The data processing part 205 includes a means for encoding and modulating the signal to be transmitted through the RF unit 203 and a means for demodulating and decoding the signal received through the RF unit 203.

The audio processing unit 207 processes the audio signal from the data processing unit 205 so as to be outputted through a speaker and transfers the audio signal inputted through a microphone to the data processing unit 205. The key input unit 209 includes a plurality of number and character keys for enabling to input the user information and various function keys for operating corresponding functions.

The memory 211 includes a program memory and a data memory. The program memory stores the programs for controlling the general operations of the portable phone and application programs for controlling the operations related to touchpad 223. The data memory temporally stores the data generated during the operations of the programs and a database for arranging the data in a form of table. Here, the database makes associations root and sub menus provided with the portable phone and maps the menus and corresponding applications and user data.

The touchpad 223 can be operated with a dedicated operation application which includes a detection module for detecting contact on the touchpad 223, a recognition module for recognizing the contact as information corresponding, an extracting module for extracting the information, and a management module for transcoding and managing the extracted information.

The control unit 201 controls the overall operation of the portable phone. The control unit 201 controls so as to configure a mode when there is a mode conversion command inputted through the key input unit 209 and display the information related to the mode conversion and required user information. Once a signal is detected through the touchpad 223, the control unit 201 analyses the input signal and moves the cursor or drags an item selected by the cursor on the screen of the display unit 219 on the basis of the analysis result. Also, the control unit 201 recognizes movement of a touch on the touchpad and locates the cursor on the screen according to the movement.

The camera 213 takes pictures and converts the pictures into digital signals in interoperation with an encoder (not shown). The signal processing unit 215 converts the digital signal from the camera into video signals.

The video processing unit 217 generates the screen data for displaying the video signal received from the signal processing unit 215. The video processing unit 215 processes the video signals so as to be displayed on the display unit 219 and compresses/decompresses the video signals.

The display unit 219 displays the video signals outputted from the video processing unit 217 on the screen. If there is signal inputted through the touchpad 223, the display unit 219 displays the movement of the cursor together with the object selected by the cursor.

The analog/digital converter 221 converts the analog signals received from the touchpad 223 into digital signals and then transfers the converted digital to the control unit 201.

The touchpad 223 can includes a pressure sensor which detects a movement of the touch point of the finger or a pen on the touchpad. If the touch point movement is detected, the touchpad 223 transmit the signal corresponding to the movement to the analog/digital converter 221. The touchpad 223 can detect the pointing or dragging manipulation so as to show a certain menu or information corresponding to the manipulation. The touchpad can be replaced by other pointing device or equivalents.

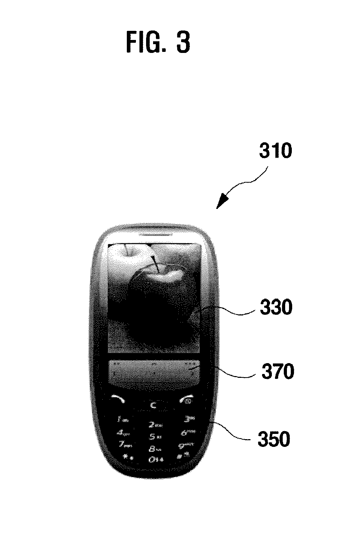

FIG. 3 is a front view of the portable phone of FIG. 2. The portable phone 310 incorporates the elements shown in FIG. 2, i.e., control unit 201, RF unit 203, data processing unit 205, audio processing unit 207, memory unit 211, signal processing unit 215, video processing unit 217, and the analog/digital converter 221. Display unit 219, key input unit 209, and touchpad 223 of FIG. 2 are arranged on the front side of the portable phone, with changed reference numerals 330, 350, and 370, respectively. Touchpad 370 is arranged below display unit 330 and above key input unit 350 in a vertical direction of portable phone 310. Touchpad 370 enables roles of navigation keys, i.e., conventional four direction keys, and other functions keys for selecting and dragging operations. While touchpad 370 is shown arranged between display unit 330 and key input unit 305, the position of touchpad 370 can be located near any part of portable phone 310. For example, touchpad 370 can be arranged below key input unit 350.

As described above, portable phone 310 is provided with the touchpad 370 for controlling directional movements and select and drag operations to enable the user to control data retrieval and checking operations in a quick and simple manner. Also, in consideration of the miniaturization of portable device 310 and its keys, touchpad 370 improves manipulation convenience and curser-hovering performance.

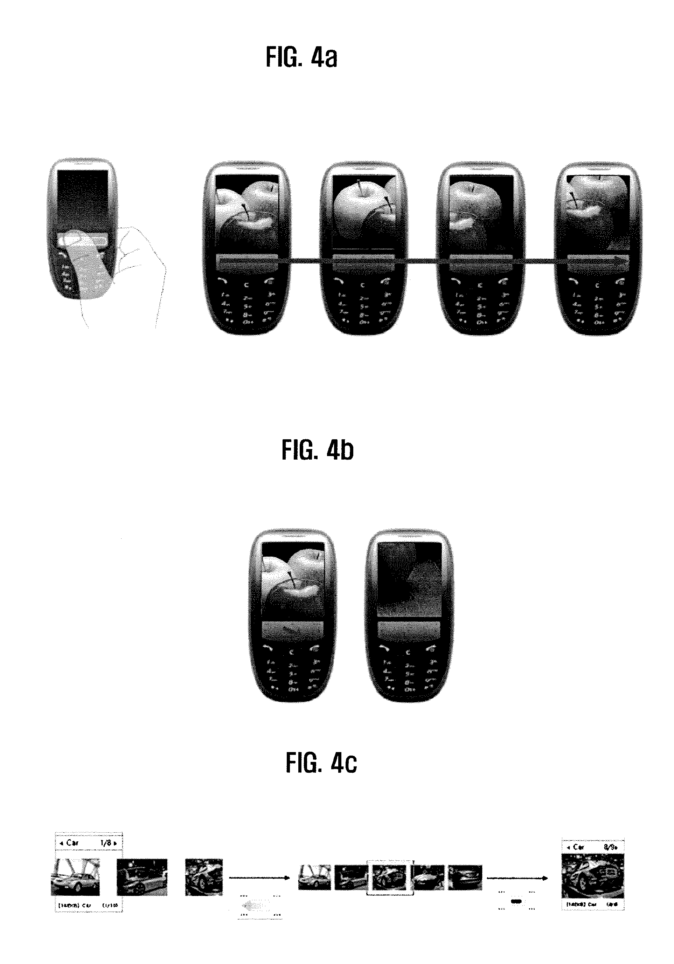

In FIGs. 4a and 4b, scrolling a window over a large image is carried out by gliding a finger tip or stylus on touchpad 370 in any direction. FIG. 4c shows passing screen-fit images and hovering on the several small images displayed on a screen for retrieving a target image.

When a user puts a finger on touchpad 370 and glides the finger in the right direction, the presentation of the image, which is larger than display window 330, is slid across display window 330. Right direction scrolling can also be performed by repeatedly touching a right portion of touchpad 370. The scrolling operation is carried out to reflect the gliding speed and pressing strength of the finger. That is, the scrolling speed and distance of the image across display window 330 are determined by the gliding speed and pressing strength of the finger.

As shown in FIG. 4a, since the presentation of the image can be slid across display window 330 by gliding the finger on touchpad 370, scrolling manipulation can be dramatically simplified.

Skewed direction scrolling is possible with touchpad 370, where the user can slide the image across display window 330 in a skewed by gliding his/her finger in the right-bottom direction, as shown in FIG 4b. This operation can also be manipulated by pushing the right-bottom portion of touchpad 370. The scrolling speed and distance of the image across display window 330 are determined by the gliding speed and pressing strength of the finger.

Since the presentation of the image can be slid across display window 330 in a skew direction by gliding a finger, in a direction to which the user wants to move the viewpoint, on touchpad 370, scrolling manipulation can be dramatically simplified.

The utilization of touchpad 370 for retrieving a target image from a plurality of stored images facilitates the retrieval operations, as shown in FIG. 4c. While a window-fit image is displayed, other images are sequentially displayed in a sliding manner by gliding fingers in a horizontal or vertical direction. The user can select the image if the target image is displayed in display window 330 while the images are sequentially sliding. When enlarging the selected image is desired, the selected image can be displayed according to the user's intention.

The target image selection can be carried out with a predetermined event. For example, by releasing a finger from touchpad 370 or clicking touchpad 370 while gliding a finger on touchpad 370, the sliding of images stops so the user can select and/or enlarge the currently displayed image with another touchpad event like an additional clicking.

Also, image sliding can be restarted by touching and gliding a finger on touchpad 370 or clicking a portion of touchpad 370 repeatedly.

The sliding speed and direction of images and the numbers of images passing across display window 330 are determined by the gliding speed and pressure level of a finger on touchpad 370. Accordingly, scrolling manipulation can be intuitively controlled and dramatically simplified.

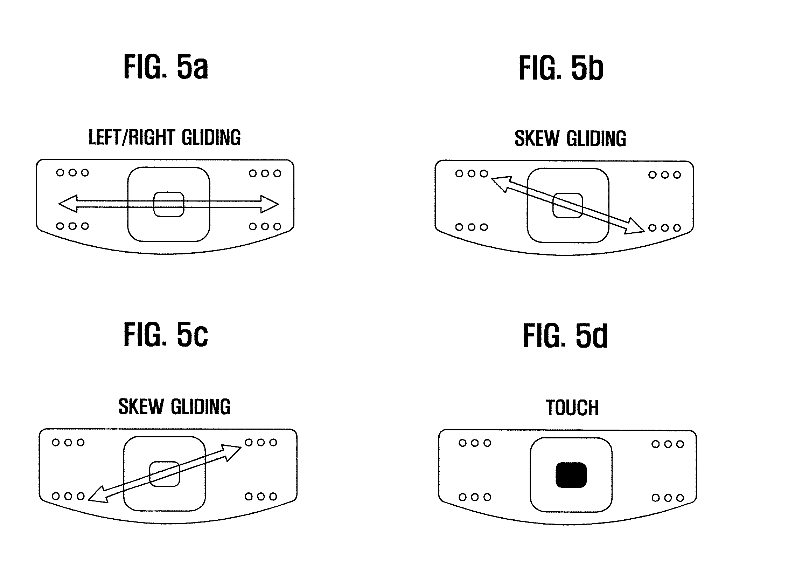

FIG. 5a shows horizontal gliding behavior of a finger with a bidirectional arrow. While the user glides his/her hand in left or right direction, the presentation of content, such as an image, slides across the display window in the same direction.

FIG. 5b shows diagonal direction gliding behavior of a finger with a bidirectional arrow. While the user glides his/her hand in an upper left direction or lower right direction, the presentation of content slides across the display window in the same direction.

FIG. 5c shows another diagonal direction gliding behavior of a finger. Accordingly, while the user glides his/her finger in a lower left direction or upper right direction, the presentation of content slides across the display window in the same direction.

FIG. 5d shows a push or a click behavior of a finger to the touchpad. If the user presses or clicks once or twice on the center of the touchpad while gliding a finger, the scrolling operation on the display window stops or a predetermined operation is triggered.

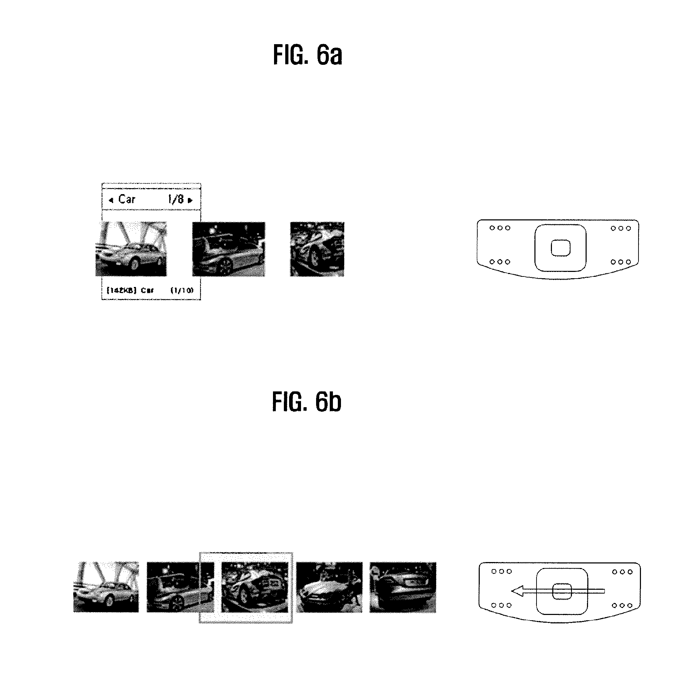

In FIGs. 6a and 6b, the contents are images and the images are shown in a preview size fit for the display window. The preview images pass across the display window in a speed corresponding to the finger gliding speed on the touchpad.

As shown in FIG. 6a, the images previously stored in the portable phone or received from outside are sequentially slid. Sliding images means changing images or flipping images.

As shown in FIG. 6b, when the user glides his/her finger in a direction of the arrow, the preview images stored in the portable phone slide in the finger gliding direction and the preview images are sequentially displayed in the display window. The sliding speed is predetermined or can be adjusted in accordance with the finger gliding speed or by the user. While a horizontal direction sliding operation is shown, the sliding direction can be vertical or other directions.

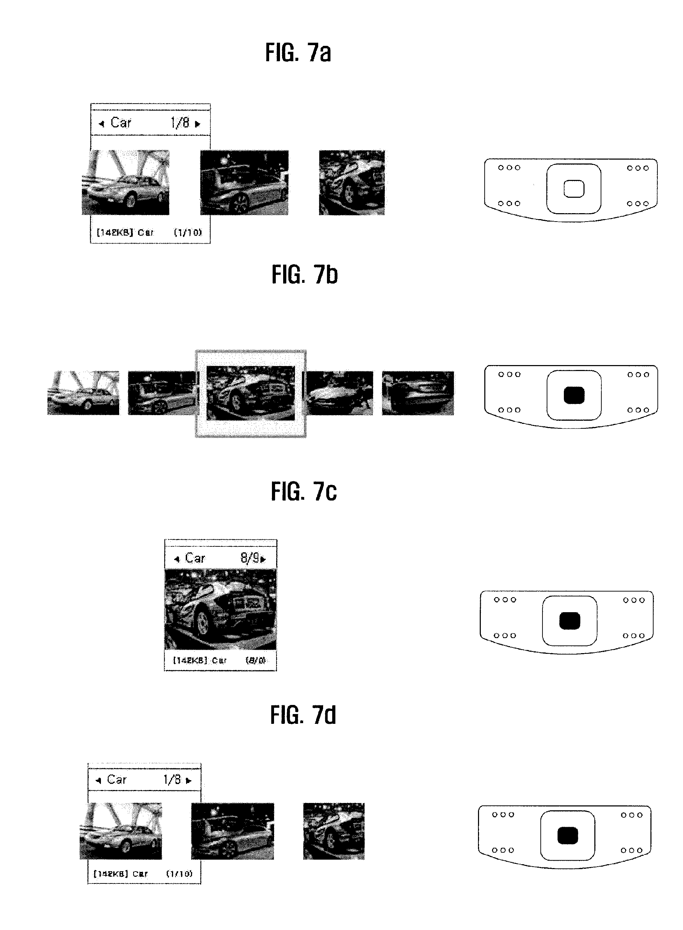

FIG. 7a to FIG. 7d are exemplary views illustrating touchpad manipulation processes for selecting image according to an embodiment of the present invention.

As shown in FIG. 7a, images, which are previously stored or received from outside, can be automatically slid in a sequential order. Here, sliding images means changing or flipping images.

In FIG. 7b, a touchpad related event occurs, i.e., when a contact on the touchpad is detected while the images are sliding, the sliding speed stops. The event can be derived by a user's touch on the touchpad with a finger or a pen with a predetermined pressure level.

Once the sliding speed stops, the image is displayed in the display window, and the selected image is shown in an enlarged preview size during a predetermined period. The preview period is set up in an initial portable phone configuration and can be adjusted by the user. When the preview period ends, the image sliding begins again.

When an event occurs when the user clicks the touchpad once or twice, while the preview image is displayed during the preview period, the previewed image becomes enlarged and is displayed as a full window size image, as shown in FIG. 7c.

When an event occurs when the user clicks the touchpad once or twice or glides the finger, while the selected image is displayed as a full window size image, the images begin sliding from the selected image or the next, as shown in FIG. 7d. The images can be slid in other direction by gliding the finger in an intended direction while the selected image is displayed as the full window size image so a previous or next image can be displayed.

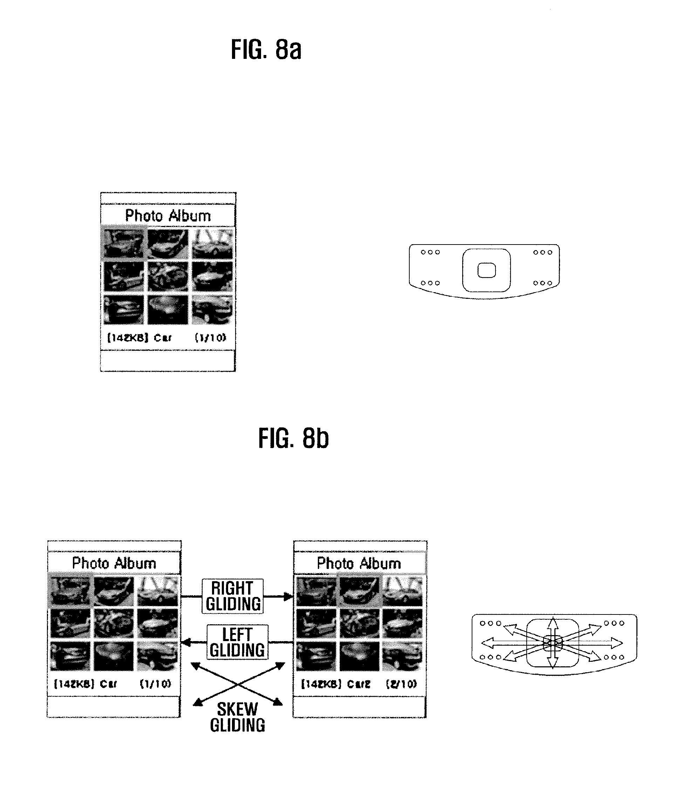

FIG. 8a and FIG. 8b are exemplary views illustrating touchpad manipulations for selecting image in a tile view mode according to an embodiment of the present invention.

In this embodiment, the display window is divided so as to form 3 by 3 grid with 9 square blocks.

FIG. 8a shows a first block, i.e., the top left block of the 3 x 3 grid, being activated. The activating cursor hovers over the nine blocks according to touchpad manipulation.

By gliding a finger in any direction, the activation curser can hover over corresponding blocks, thereby enabling selection of an image by clicking the touchpad when the target image is activated, as shown in FIG. 8b. The activation curser can move across the display window in diagonal directions as well as horizontal and vertical directions.

While hovering the activation cursor over image blocks, when an event occurs, such as the touchpad being pushed or clicked, the hovering speed stops. The image on which the activation curser stops is shown in an enlarged size during a predetermined period. The preview period is set up in an initial portable phone configuration and can be adjusted by the user. If the preview period ends, the image sliding begins again.

When the user clicks the touchpad once or twice, while the activated image is shown in the enlarged size, the preview image becomes enlarged and is displayed as a full window size image.

As described above, the touchpad can recognize the gliding speed and directions of contact fingers so the portable phone controls the cursor to hover in accordance with the gliding speed and directions, resulting in improvement of cursor positioning and scrolling performance.

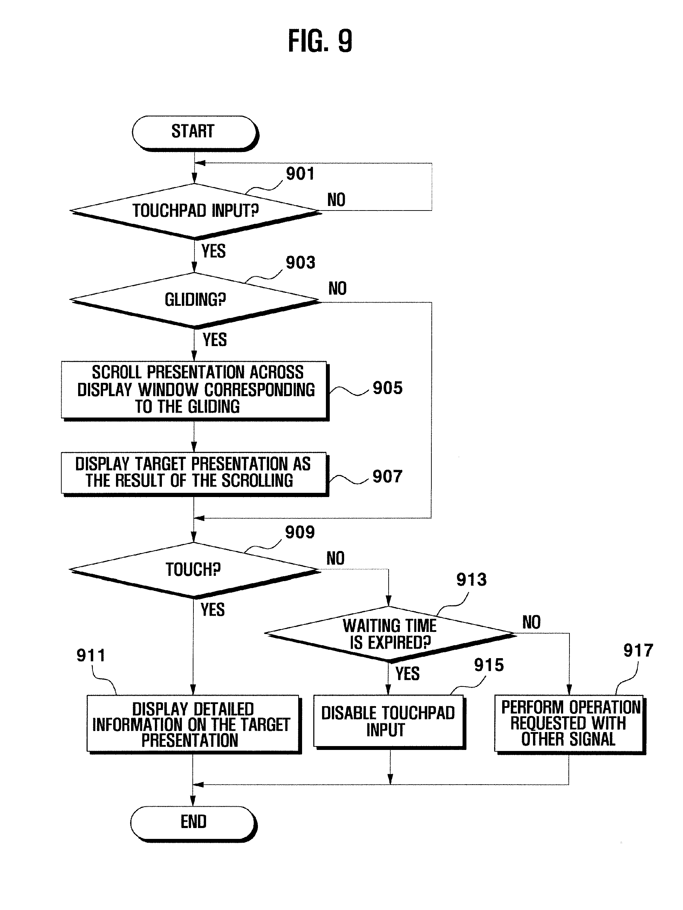

Referring to FIG. 9, the portable phone determines whether a signal is input through the touchpad at step 901. If it is determined that a touchpad-driven signal is input, the portable phone determines whether the touchpad-driven signal is a gliding motion signal at step 903. The gliding motion can be recognized by sensing the pressure and movement applied to the touchpad. If it is determined that the input signal is the gliding motion signal, the portable phone analyzes the gliding directions and scrols the content currently displayed on the screen across the display window in the same direction at step 905. The scrolling speed can be set in accordance with the gliding speed and pressure level applied to the touchpad.

Once scrolling is completely executed, the portable phone displays the target portion of the content in the display window at step 907. While the target portion of the content is displayed in the display screen, the portable phone determines whether a signal is generated by pushing the touchpad at step 909. Also, if it is determined that the input signal is not the gliding motion signal at step 903, the portable phone determines whether a signal is generated by pushing the touchpad at step 909.

If it is determined that a signal is input by pushing the touchpad, the portable phone displays detailed information on the portion currently displayed in the display window at step 911. For example, in case of selecting one of the sliding images, the portable phone displays the image in a full screen size image according to the push signal.

On the other hand, if it is determined that there is no push signal input through the touchpad, the portable phone determines whether a predetermined waiting time is expired at step 913. If the waiting time is expired, the portable phone determines there is no further input signal and terminates the touchpad input waiting at step 915. If the waiting time is not expired, the portable phone checks if there is another type of input signal and performs a corresponding operation at step 917.

As described above, since the portable phone of the present invention is provided with a touchpad, which enables input of instructions for scrolling content, such as image or text, across the display window in various directions by gliding a finger on the touchpad, it is possible to improve content navigation and image retrieval performance. The portable phone equipped with the touchpad of the present invention also improves reliability and speed of cursor positioning and data retrieval thanks to the intuitive touchpad manipulations.

As described above, the touchpad-based input system and method of the portable device according to the present invention enables the user to input commands for scrolling content, such as images, maps, text, documents, etc., and for hovering between files by manipulating the touchpad in an intuitive manner so it is possible to position the cursor in a single content or to retrieve a target one from a plurality of files reliably and accurately.

The touchpad-based input system and method of the portable device according to the present invention also provides an intuitive manipulation using the touchpad so it is possible to reduce the complexity of keypad manipulation for dealing with content.

Although preferred embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A touchpad-based input method of a portable device having a display (219, 330) and a touchpad (223, 370), comprising:
determining whether a scrolling signal is input through the touchpad;
scrolling a current presentation across the display based on the scrolling signal when the scrolling signal is input; and
displaying a scrolled presentation as a result of the scrolling.

2. The method of claim 1, further comprising:
determining whether a selection signal is input through the touchpad (223, 370) while scrolling the current presentation; and
stopping scrolling the current presentation if the selection signal is input.

3. The method of claim 1, wherein the scrolling signal includes information on a scrolling speed and a scrolling direction.

4. The method of claim 3, wherein the presentation is scrolled based on the scrolling speed and the scrolling direction.

5. A touchpad-based input method of a portable device having a display (219, 330) and a touchpad (223, 370), comprising:
determining whether a sliding signal is input through the touchpad;
sliding a plurality of presentation items across the display (219, 330) based on the sliding signal when the sliding signal is input; and
displaying a presentation item as a result of the sliding.

6. The method of claim 5, further comprising:
determining whether a selection signal is input through the touchpad (223, 370) while sliding the presentation items; and
stopping the sliding of presentation items when the selection signal is input.

7. The method of claim 5, wherein the sliding signal includes information on a sliding speed and a sliding direction.

8. The method of claim 7, wherein the presentation items are slid based on the sliding speed and the sliding direction.

9. A touchpad-based input system of a portable device, comprising:
a touchpad (223, 370) which generates a manipulation signal corresponding to a user's touchpad manipulation;
a display (219, 350) which shows a presentation rendered in accordance with the manipulation signal;
a controller (201) which generates a control signal corresponding to the manipulation signal and controls the display to render the presentation and displays the rendered presentation based on the control signal.

10. The touchpad-based input system of claim 9, further comprising a memory (211) which stores programs for operating the portable device and a program for operating the touchpad.

11. The touchpad-based input system of claim 9, further comprising an analog/digital converter (221) which receives an analog signal input through the touchpad and converts the analog signal into a digital signal.

12. The touchpad-based input system of claim 9, wherein the touchpad (223, 370) includes a pressure sensor.

13. The touchpad-based input system of claim 9, wherein the touchpad (223, 370) detects the user's manipulation and performs operation functions of menu selection, data retrieval and checking functions based on the user's manipulation through the display.

14. The touchpad-based input system of claim 9, wherein the touchpad (223, 370) includes a pointing device.

15. The touchpad-based input system of claim 9, wherein the control signal is a scrolling signal for scrolling the presentation across the display (219, 350).

16. The touchpad-based input system of claim 15, wherein the scrolling signal includes information on a scrolling speed and a scrolling direction.

17. The touchpad-based input system of claim 16, wherein the presentation is scrolled based on the scrolling speed and the scrolling direction.
